(19) Europäisches Patentamt
European Patent Office
Office européen des brevets

(11) **EP 3 653 992 B1**

(12) **FASCICULE DE BREVET EUROPEEN**

(45) Date de publication et mention
de la délivrance du brevet:
**08.05.2024 Bulletin 2024/19**

(21) Numéro de dépôt: **19204836.1**

(22) Date de dépôt: **23.10.2019**

(51) Classification Internationale des Brevets (IPC):
**G01C 21/20** *(2006.01)* **G01C 21/36** *(2006.01)*
**G01C 21/34** *(2006.01)* **G01W 1/10** *(2006.01)*

(52) Classification Coopérative des Brevets (CPC):
**G01C 21/3697; G01C 21/20; G01C 21/3453;
G01C 21/3461; G01C 21/3691**

(54) **PROCEDE DE DETERMINATION D'UN CUMUL D'INTEMPERIES SUR UN TRAJET**

VERFAHREN ZUR BESTIMMUNG EINER KUMULIERUNG VON SCHLECHTEN
WITTERUNGSBEDINGUNGEN AUF EINER STRECKE

METHOD FOR DETERMINING AN ACCUMULATION OF BAD WEATHER ON A PATH

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.11.2018 FR 1871573**

(43) Date de publication de la demande:
**20.05.2020 Bulletin 2020/21**

(73) Titulaire: **IFP Energies nouvelles
92852 Rueil-Malmaison Cedex (FR)**

(72) Inventeurs:
• **GODEFROY, Vincent
92852 RUEIL-MALMAISON CEDEX (FR)**
• **CHASSE, Alexandre
92852 RUEIL-MALMAISON CEDEX (FR)**
• **CORDE, Gilles
92852 RUEIL-MALMAISON CEDEX (FR)**

(74) Mandataire: **IFP Energies nouvelles
Département Propriété Industrielle
Rond Point de l'échangeur de Solaize
BP3
69360 Solaize (FR)**

(56) Documents cités:
EP-A1- 2 981 789    EP-B1- 2 981 789
EP-B1- 3 341 687    JP-A- 2009 264 902
JP-B2- 5 685 010    US-A1- 2015 198 739
US-A1- 2015 292 892  US-A1- 2016 327 406
US-A1- 2017 098 167  US-A1- 2017 102 240
US-B1- 6 633 812    US-B1- 8 600 658

## Description

### Domaine technique

La présente invention concerne le domaine de la détermination d'un cumul d'intempéries sur un trajet à parcourir par un utilisateur avec un moyen de locomotion, notamment pour les moyens de locomotion sensibles aux précipitations. La présente invention est particulièrement adaptée pour déterminer le cumul de pluie sur un trajet parcouru par un deux-roues, notamment une bicyclette.

### Technique antérieure

De nos jours, les services et les systèmes connectés d'aide à la navigation sont de plus en plus répandus. Ces systèmes et services connectés permettent notamment de déterminer un trajet pour atteindre une destination, chaque service ou système de navigation ayant sa spécificité. Certains services ou systèmes connectés recherchent le chemin le plus court, d'autres le chemin le plus rapide, d'autres encore le chemin qui minimise l'énergie consommée, etc. Ces solutions peuvent être générales ou spécifiques à un type de moyen de locomotion, par exemple spécifique aux bicyclettes.

Toutefois, certains moyens de locomotion sont sensibles aux précipitations, notamment pour les conditions de confort et de sécurité. C'est pourquoi, il est souhaitable de déterminer le cumul de précipitations sur un trajet à parcourir pour aider l'utilisateur d'un tel moyen de locomotion.

Certains services en ligne proposent d'associer la météo au trajet à parcourir, parmi lesquels on peut citer AccuWeather (https://www.accuweather.com/en/driving-directions-weather), Morecast (https://morecast.com/fr/plan-vour-route), ViaMichelin (https://www.viamichelin.fr/web/Itineraires) ou Wetter.com. Ces services en ligne présentent l'inconvénient d'être à grande échelle, en termes de distance et de durée, et par conséquent peu adaptés aux moyens de locomotion de type mobilité douce (bicyclette, trottinette, patin à roulettes, monoroue gyroscopique, etc.) qui parcourent de moins grandes distances et avec des durées de trajet plus courtes. De plus, ces services en ligne n'indiquent qu'une information météorologique en certains points du trajet, mais ne fournissent pas une information globale relative au niveau de précipitations cumulées sur la totalité du trajet.

Ainsi, avec l'utilisation de tels services, un utilisateur peut uniquement savoir s'il va être soumis à des intempéries, sans avoir un indicateur de la quantité de précipitations auquel il va être soumis pendant son trajet.

La publication de brevet JP 5685010 B2 divulgue la détermination d'un cumul d'intempéries sur un trajet à parcourir par un utilisateur avec un moyen de locomotion.

Pour pallier ces inconvénients, la présente invention concerne un procédé de détermination d'un cumul d'intempéries selon la revendication 1. Un tel procédé est adapté à tous types de moyen de locomotion et permet de déterminer une information globale relative du niveau de précipitations cumulées sur la totalité du trajet, dans le but d'améliorer le confort et la sécurité de l'utilisateur.

### Résumé de l'invention

L'invention concerne un procédé de détermination d'un cumul d'intempéries selon la revendication 1. Des caractéristiques optionnelles de l'invention sont présentées dans les revendications dépendantes.

En outre, l'invention concerne un produit programme d'ordinateur selon la revendication 11.

### Liste des figures

D'autres caractéristiques et avantages du procédé selon l'invention, apparaîtront à la lecture de la description ci-après d'exemples non limitatifs de réalisations, en se référant aux figures annexées et décrites ci-après.

[Fig 1]

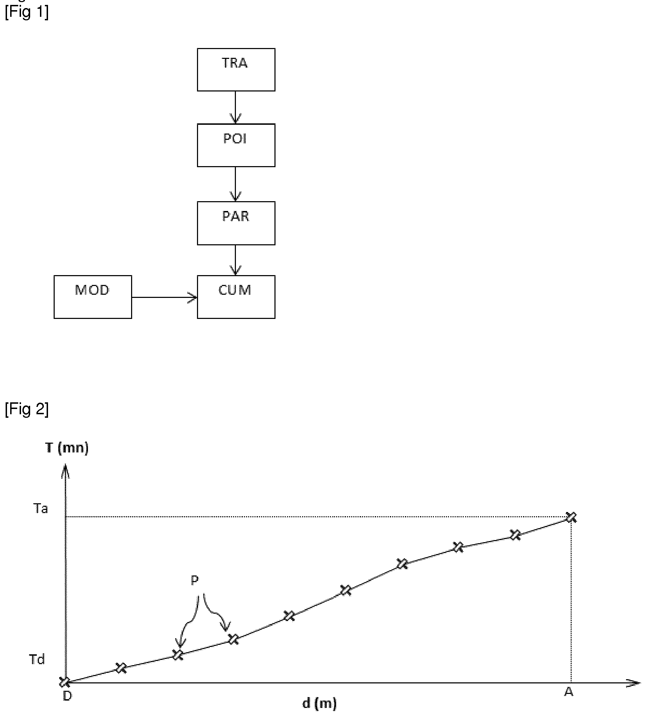

La figure 1 illustre les étapes du procédé selon un mode de réalisation de l'invention.

[Fig 2]
La figure 2 est une courbe représentant un trajet dans un référentiel temps/distance.

[Fig 3]

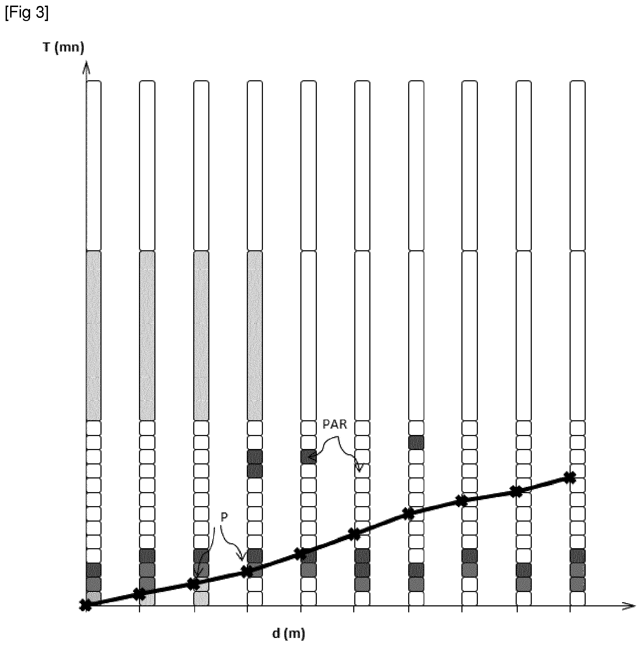

La figure 3 représente le paramètre météorologique variable dans le temps sur le trajet pour l'exemple de la figure 2.

[Fig 4]

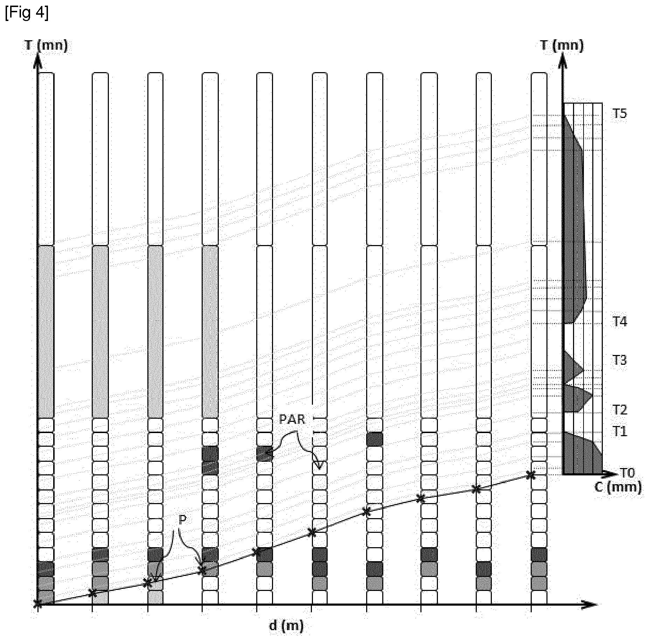

La figure 4 est une courbe similaire à la figure 3 sur laquelle on représente également le cumul d'intempéries en fonction de l'instant de départ.

### Description des modes de réalisation

La présente invention concerne un procédé de détermination d'un cumul d'intempéries sur un trajet à parcourir par un utilisateur par un moyen de locomotion.

On entend par intempéries ou par précipitations, tous types de conditions météorologiques pouvant gêner le trajet et réduire le confort et la sécurité de l'utilisateur : pluie, orage, neige, grêle, verglas, vent, etc.. Le cumul d'intempéries représente la quantité d'intempéries reçues par l'utilisateur pendant le trajet. Ce cumul d'intempéries peut correspondre à une quantité de pluie reçue par l'utilisateur pendant son trajet. Cette quantité de pluie peut être mesurée en tant qu'une hauteur de pluie par heure.

Le moyen de locomotion peut être choisi parmi :

la marche à pied, la course à pied, la mobilité douce (bicyclette, trottinette, patin à roulettes, planche à roulettes, monoroue gyroscopique, ou systèmes analogues), les deux roues (moto, scooter), véhicule décapotable. Il s'agit de moyens de locomotion sensibles aux conditions météorologiques. De préférence, le moyen de locomotion est une bicyclette avec ou sans assistance électrique. En effet, le procédé selon l'invention est bien adapté à un tel moyen de locomotion, notamment en termes de durée et de distance du trajet.

Le procédé selon l'invention est adapté au type de moyen de locomotion par la mise en oeuvre d'un modèle de vitesse du moyen de locomotion. On appelle modèle de vitesse du moyen de locomotion un modèle qui définit la vitesse du moyen de locomotion sur le trajet. Pour cela, le modèle de vitesse du moyen de locomotion prend en compte le type de moyen de locomotion : par exemple bicyclette sans assistance électrique, bicyclette avec assistance électrique, deux-roues, etc. En outre, le modèle de vitesse du moyen de locomotion dépend d'au moins un autre paramètre choisi parmi : le type de route (chemin, route de ville, route de campagne, autoroute, etc.), l'inclinaison de la route, la puissance développée par le moyen de locomotion (il peut s'agir d'une part de la puissance du moyen de locomotion, et de la puissance de l'utilisateur dans le cas notamment des bicyclettes, trottinettes ou systèmes analogues), etc.

Le procédé selon l'invention comporte les étapes suivantes :

1. Définition du trajet à parcourir
2. Identification des points de passage
3. Association de paramètres météorologiques
4. Détermination du cumul d'intempéries sur le trajet
5. (optionnel) Détermination de la variation du cumul d'intempéries dans le temps

Les étapes sont mises en oeuvres par des moyens informatiques, qui peuvent notamment être un ordinateur, une tablette numérique, ou un téléphone intelligent ou tout moyen analogue. Les moyens informatiques comportent une mémoire qui stocke le modèle de vitesse du moyen de locomotion. Selon un mode de réalisation, les moyens informatiques peuvent comprendre une interface homme machine, afin que l'utilisateur puisse définir le moyen de locomotion utilisé.

La figure 1 illustre, schématiquement et de manière non limitative, les étapes du procédé selon un mode de réalisation de l'invention. Le procédé comporte une première étape de définition du trajet à parcourir (TRA), puis une étape d'identification de points de passage du trajet (POI). Ensuite, le procédé réalise une étape d'association de paramètres météorologiques (PAR) aux points de passage du trajet déterminés à l'étape précédente. Enfin, au moyen du modèle de vitesse du moyen de locomotion (MOD) déterminé préalablement, le procédé détermine le cumul d'intempéries (CUM) sur le trajet à parcourir.

Les étapes du procédé selon l'invention sont détaillées dans la suite de la description.

1. Définition du trajet à parcourir

Lors de cette étape, on détermine le trajet à parcourir par l'utilisateur par le moyen de locomotion. Pour cela, le procédé peut réaliser deux sous-étapes : une première sous-étape de détermination de la position de départ et d'identification de l'arrivée, et une deuxième sous-étape de détermination du trajet entre la position et l'arrivée.

*a) détermination de la position de départ et de la position d'arrivée*

Lors de cette sous-étape, on détermine la position de départ de l'utilisateur. Selon un mode de réalisation préféré, on peut déterminer la position de départ en tant que position actuelle de l'utilisateur par mesure, notamment au moyen d'un système de géolocalisation (par exemple de type GPS ou Galileo), lié aux moyens informatiques. Par exemple, un tel système de géolocalisation est présent dans un téléphone intelligent. Alternativement, on peut déterminer la position de départ par définition du point de départ par l'utilisateur, par exemple au moyen d'une interface homme-machine.

Puis, on identifie l'arrivée de l'utilisateur, en déterminant son point d'arrivée, à savoir la position qui sera occupée par le moyen de locomotion à l'issue du trajet envisagé.

Selon une première variante de réalisation, l'arrivée de l'utilisateur peut être indiquée par l'utilisateur, notamment au moyen d'une interface homme machine avec les moyens informatiques mettant en oeuvre le procédé selon l'invention.

Selon une deuxième variante de réalisation, l'arrivée de l'utilisateur peut être déterminée automatiquement, notamment au moyen d'un historique de trajets de l'utilisateur. Pour cette variante de réalisation, les moyens informatiques mettant en oeuvre le procédé selon l'invention peuvent comprendre une mémoire qui mesure et enregistre les données des précédents trajets de l'utilisateur, et ensuite les moyens informatiques peuvent associer l'instant et le point de départ à un trajet récurrent de l'utilisateur.

*b) détermination du trajet entre la position et l'arrivée*

Lors de cette sous-étape, on détermine au moins un trajet à parcourir par l'utilisateur par le moyen de locomotion entre la position mesurée et l'arrivée déterminée à la sous-étape précédente. La détermination du trajet peut être réalisée par les moyens informatiques, en répondant à une ou plusieurs contraintes, telles que chemin le plus court, le chemin adapté au moyen de locomotion, le chemin qui minimise l'énergie consommée, etc.

Pour cela, et selon un mode de réalisation de l'invention, on peut déterminer le trajet à parcourir au moyen d'un algorithme de plus court chemin. De préférence, l'algorithme de plus court chemin peut être contraint par le moyen de locomotion. En d'autres termes, l'algorithme de plus court chemin peut prendre en compte les chemins adaptés au moyen de locomotion utilisé.

Selon une alternative, le trajet à parcourir peut être déterminé automatiquement au moyen d'un historique de trajets de l'utilisateur. Pour cette variante de réalisation, les moyens informatiques mettant en oeuvre le procédé selon l'invention peuvent comprendre une mémoire qui mesure et enregistre les données des précédents trajets de l'utilisateur, et ensuite les moyens informatiques peuvent associer un trajet à parcourir en fonction de la position mesurée et de l'arrivée déterminée à la sous-étape précédente.

## 2. Identification des points

Lors de cette étape, on identifie une pluralité de points de passage sur le trajet à parcourir. Ces points sont géolocalisés. Par exemple, les points de passage peuvent être caractérisés par leur latitude et leur longitude. Il s'agit de points qui servent à la détermination du cumul d'intempéries aux étapes 3) et 4).

Les points de passage sont répartis régulièrement sur le trajet. Ainsi, il est possible d'avoir une bonne précision de la valeur du cumul d'intempéries sur le trajet. L'espacement entre les points est déterminé selon la précision spatiale du service en ligne de prévisions météorologiques utilisé à l'étape 3) (par exemple, on peut choisir un espacement correspondant à la moitié de la précision spatiale du service en ligne de prévisions météorologiques). Avantageusement, l'espacement entre les points peut être déterminé selon le type de moyen de locomotion.

Selon un exemple de réalisation de l'invention, pour lequel le moyen de locomotion est une bicyclette, l'espacement des points de passage peut être compris entre 100 m et 1km, et peut valoir environ 500 m.

[Fig 2]

La figure 2 est une courbe illustrant un trajet, dans un référentiel temps T en minute min - distance d en mètre m. Le moyen de locomotion part du départ D (position mesurée) au temps Td, pour terminer à l'arrivée A (identifiée) au temps Ta. Le trajet entre les points D et A est déterminé à la sous-étape b de l'étape 1. Au moyen du modèle de vitesse du moyen de locomotion, on détermine la courbe représentée en figure 2. On observe sur cette courbe que la vitesse n'est pas constante sur toutes les portions du trajet, cette variation de la vitesse peut être liée au type de route et à l'inclinaison de la route. Ensuite, on identifie huit points de passage P entre le départ D et l'arrivée A. Pour l'exemple illustré, les points de passage sont régulièrement espacés d'une distance de 500 m.

## 3. Association de paramètres météorologiques

Lors de cette étape, on associe à chaque point du trajet déterminé à l'étape précédente un paramètre météorologique. Le paramètre météorologique est un paramètre variable dans le temps et est un paramètre lié aux prévisions d'intempéries. Ainsi, pour chaque point, on possède une évolution dans le temps d'un paramètre lié aux conditions météorologiques.

Selon un mode de réalisation de l'invention, le paramètre météorologique peut être une échelle d'intempéries, par exemple une échelle de pluie (ou une échelle de neige) pouvant être exprimée en mm de pluie (ou de neige) par heure.

Le paramètre météorologique est déterminé au moyen d'un service en ligne de prévisions météorologiques. Un tel service en ligne possède une précision temporelle et spatiale compatible avec les mobilités douces. En effet, les services en ligne actuels proposés par Météo France (RadarExpert et PremiumForecast) possèdent une précision géographique kilométrique pour un pas de temps de cinq minutes pour les premières soixante-cinq minutes pour RadarExpert, puis un pas de temps d'une heure, puis un pas de temps de trois heures puis de 6 heures en 6 heures pour PremiumForecast. Ainsi, il est possible de déterminer un cumul d'intempéries même pour un trajet avec un moyen de locomotion de type mobilité douce.

Selon un aspect de l'invention, le paramètre météorologique peut comprendre un aspect probabiliste pour déterminer un risque de précipitations aux points considérés.

[Fig 3]

La figure 3 illustre, pour l'exemple de la figure 2, une représentation d'un paramètre météorologique pour un trajet dans un référentiel temps T en minute min - distance d en mètre m. Sur cette figure, le trajet et les points de passage P identifiés à l'étape précédente sont indiqués en traits noirs et gras. En outre, le paramètre météorologique est illustré par un niveau de gris dans des carrés ou rectangles. Pour l'échelle de couleur du paramètre météorologique, le blanc indique une absence d'intempéries, et les variations de gris indiquent des niveaux d'intempéries différents (les gris les plus foncés correspondent aux intempéries les plus importantes). Les carrés et les rectangles représentent le pas de temps de prévision du service en ligne : les carrés correspondent à un pas de temps de prévision de cinq minutes, alors que les rectangles correspondent à un pas de temps de prévision d'une heure. On remarque sur cette figue, que l'utilisateur, s'il part tout de suite, va avoir de la pluie sur la première partie du trajet (jusqu'au quatrième point de passage P), et ne va pas avoir de pluie sur la deuxième partie du trajet (à partir du quatrième point de passage P).

4. Détermination du cumul d'intempéries sur le trajet

Lors de cette étape, on détermine, pour au moins un temps de départ (en d'autres termes, pour au moins une échéance prévisionnelle), un cumul d'intempéries sur le trajet, par la somme du paramètre météorologique aux points de passage identifiés. Pour cela, on détermine l'instant de passage en chaque point de passage du trajet, au moyen du modèle de vitesse du moyen de locomotion, ce qui permet de déterminer la valeur du paramètre météorologique pour chaque point du trajet. Le cumul d'intempéries permet d'avoir une donnée globale des conditions météorologiques sur le trajet à parcourir.

Selon un mode de réalisation de l'invention, on peut déterminer le cumul d'intempéries sur le trajet, au moyens des équations suivantes :

[Math 1]

$$Cumul = \sum_{i=1}^{N} Cumul_i$$

[Math 2]

$$Cumul_i = Param_i \times \Delta tc_i$$

[Math 3]

$$\Delta tc_i = \frac{t_i - t_{i-1}}{2} + \frac{t_{i+1} - t_i}{2}$$

Avec Cumul le cumul d'intempéries sur le trajet, N le nombre de points de passage identifiés sur le trajet, $Cumul_i$ le cumul d'intempéries entre deux points consécutifs du trajet, $Param_i$ la valeur du paramètre météorologique au point de passage i considéré, $\Delta tc_i$ la durée associée au point de passage considéré i, $t_i$ le temps du point de passage i considéré, $t_{i-1}$ le temps du point précédent le point considéré et $t_{i+1}$ le temps du point suivant le point considéré.

5. Détermination de la variation du cumul d'intempéries dans le temps

Selon un mode de réalisation de l'invention, le procédé selon l'invention peut comprendre en outre une étape facultative de détermination du cumul d'intempéries pour plusieurs temps de départ. Grâce à la variation temporelle du paramètre météorologique, il est possible de déterminer le cumul d'intempéries pour plusieurs instants de départ. En effet, si on retarde le départ, les conditions météorologiques changent sur le trajet et le cumul d'intempéries varie.

Ce mode de réalisation est particulièrement adapté pour les paramètres météorologiques obtenus depuis des services en ligne, du fait de leur précision, notamment dans les premiers instants.

Conformément à une variante de ce mode de réalisation, le procédé selon l'invention peut comprendre une étape supplémentaire de détermination de l'instant de départ qui minimise le cumul d'intempéries sur le trajet. Ainsi, l'utilisateur peut éviter au maximum les intempéries, et peut se déplacer en ayant un maximum de confort et de sécurité.

[Fig 4]

La figure 4 illustre, pour l'exemple des figures 2 et 3, une représentation d'un paramètre météorologique pour un trajet dans un référentiel temps T en minute min - distance d en mètre m, ainsi qu'une représentation du cumul C d'intempéries C en mm en fonction du temps T en minutes mn. Sur cette figure, le trajet et les points P identifiés à l'étape précédente sont indiqués en traits noirs et gras. En outre, le paramètre météorologique est illustré par un niveau de gris dans des carrés ou rectangles. Pour l'échelle de couleur du paramètre météorologique, le blanc indique une absence d'intempéries, et les variations de gris indiquent des niveaux d'intempéries différents. Les carrés et les rectangles représentent le pas de temps de prévision du service en ligne : les carrés correspondent à un pas de temps de prévision de cinq minutes, alors que les rectangles correspondent à un pas de temps de prévision d'une heure.

La courbe du cumul d'intempéries en fonction du temps est illustrée dans la partie droite de la figure. On remarque que le cumul d'intempéries varie en fonction du temps T. Sur cette courbe, le temps T correspond à la durée de report du départ. Le temps T0 correspond à un départ immédiat, les temps T1 à T5 correspondent à des départs différés par rapport au temps T0. Au moyen de la courbe du cumul d'intempéries en fonction du temps, on remarque que pour un départ compris entre les temps T0 et T1, l'utilisateur va subir des intempéries, ce qui n'est pas le cas entre T1 et T2. De la même manière pour un retard compris entre les temps T2 et T3, ou un retard compris entre T4 et T5, l'utilisateur va subir des intempéries, alors que pour un retard compris T3 et T4 l'utilisateur va rester au sec. Le maximum du cumul d'intempéries est obtenu pour un temps de départ compris entre T0 et T1. Par conséquent, ce mode de réalisation de l'invention permet de déterminer le moment de départ de l'utilisateur, afin d'optimiser les conditions météorologiques de son trajet, dans le but d'améliorer le confort et la sécurité de l'utilisateur.

Une fois le ou les cumul(s) d'intempéries déterminés, on peut enregistrer et/ou transmettre cette information à l'utilisateur (ou à toute autre personne) au moyen d'un affichage. Cet enregistrement et/ou affichage peut être réalisé à bord du véhicule : sur le tableau de bord, sur un dispositif portatif autonome, tel qu'un appareil de géolocalisation (de type GPS), un téléphone portable (de type ordiphone, traduction de l'anglicisme smartphone), une tablette numérique, un ordinateur portable. Il est également possible d'enregistrer et d'afficher ce cumul d'intempéries sur un site internet, que l'utilisateur peut consulter antérieurement à son trajet.

Selon une variante de ce mode de réalisation, on peut également afficher le trajet à parcourir par l'utilisateur.

Pour le mode de réalisation pour lequel on détermine le cumul d'intempéries pour plusieurs instants de départ, on peut en outre afficher l'instant de départ qui minimise les intempéries sur le trajet et/ou la variation du cumul d'intempéries en fonction du temps de départ.

L'invention concerne par ailleurs un produit programme d'ordinateur téléchargeable depuis un réseau de communication et/ou enregistré sur un support lisible par ordinateur et/ou exécutable par un processeur ou un serveur. Ce programme comprend des instructions de code de programme pour la mise en oeuvre du procédé tel que décrit ci-dessus, lorsque le programme est exécuté sur un ordinateur ou un téléphone portable ou tout système analogue.

## Revendications

1. Procédé de détermination d'un cumul d'intempéries sur un trajet à parcourir par un utilisateur avec un moyen de locomotion, dans lequel on construit un modèle de vitesse (MOD) dudit moyen de locomotion, dans lequel on réalise les étapes suivantes par des moyens informatiques :

   a) On détermine la position de départ et la position d'arrivée dudit moyen de locomotion ;
   b) On détermine au moins un trajet à parcourir (TRA) entre ladite position de départ et ladite position d'arrivée ;
   c) On identifie une pluralité de points (POI) sur ledit trajet, lesdits points dudit trajet étant régulièrement espacés ;
   d) On associe à chaque point dudit trajet un paramètre météorologique (PAR) variable dans le temps, ledit paramètre météorologique étant lié aux prévisions d'intempéries, ledit paramètre météorologique (PAR) étant déterminé au moyen d'un service en ligne de prévisions météorologiques ; et
   e) On détermine un cumul d'intempéries (CUM) sur ledit trajet par la somme dudit paramètre météorologique auxdits points dudit trajet, en déterminant le temps de passage auxdits points par ledit utilisateur au moyen dudit modèle de vitesse dudit moyen de locomotion appliqué audit trajet,

**caractérisé en ce que** ledit modèle de vitesse dudit moyen de locomotion estime la vitesse dudit moyen de locomotion en fonction du type de moyen de locomotion, et **en ce que** ledit modèle de vitesse est fonction d'au moins un paramètre choisi parmi le type de route, l'inclinaison de la route, la puissance développée par ledit moyen de locomotion, l'espacement entre les points étant déterminé selon la précision spatiale dudit service en ligne de prévisions météorologiques utilisé à l'étape d).

2. Procédé selon la revendication 1, dans lequel on détermine ledit trajet (TRA) par un algorithme de plus court chemin.

3. Procédé selon la revendication 2, dans lequel ledit algorithme de plus court chemin est contraint par ledit moyen de locomotion.

4. Procédé selon la revendication 1, dans lequel on détermine ledit trajet (TRA) au moyen d'un historique de trajets dudit utilisateur.

5. Procédé selon l'une des revendications précédentes, dans lequel l'espacement dépend dudit moyen de locomotion.

6. Procédé selon l'une des revendications précédentes, dans lequel on réalise l'étape de détermination du cumul d'intempéries (CUM) sur ledit trajet pour plusieurs instants de départ.

7. Procédé selon la revendication 6, dans lequel le procédé comprend une étape supplémentaire de détermination de l'instant de départ qui minimise le cumul d'intempéries sur ledit trajet.

8. Procédé selon l'une des revendications précédentes, dans lequel on détermine la position de départ en mesurant la position actuelle dudit utilisateur.

9. Procédé selon l'une des revendications précédentes, dans lequel ledit procédé comprend en outre une étape d'affichage dudit cumul d'intempéries sur ledit trajet sur un dispositif d'affichage, tel qu'un téléphone intelligent, une tablette numérique, un tableau de bord, un site en ligne.

10. Procédé selon l'une des revendications précédentes, dans lequel ledit moyen de locomotion est choisi parmi : la marche à pied, la course à pied, la mobilité douce, les deux-roues, de préférence ledit moyen de locomotion est une bicyclette avec assistance électrique ou non.

**11.** Produit programme d'ordinateur téléchargeable depuis un réseau de communication et/ou enregistré sur un support lisible par ordinateur et/ou exécutable par un processeur ou un serveur, comprenant des instructions de code de programme pour la mise en oeuvre du procédé selon l'une des revendications précédentes, lorsque ledit programme est exécuté sur un ordinateur ou sur un téléphone portable.

**Patentansprüche**

**1.** Verfahren zur Bestimmung einer Häufung von schlechten Witterungsbedingungen auf einer von einem Benutzer mit einem Fortbewegungsmittel zurückzulegenden Strecke, wobei ein Geschwindigkeitsmodell (MOD) des Fortbewegungsmittels konstruiert wird, wobei die folgenden Schritte von EDV-Einrichtungen durchgeführt werden:

a) die Startposition und die Ankunftsposition des Fortbewegungsmittels werden bestimmt;
b) mindestens eine zwischen der Startposition und der Ankunftsposition zurückzulegende Strecke (TRA) wird bestimmt;
c) eine Vielzahl von Punkten (POI) wird auf der Strecke bezeichnet, wobei die Punkte der Strecke einen gleichmäßigen Abstand haben;
d) jedem Punkt der Strecke wird ein zeitlich veränderbarer meteorologischer Parameter (PAR) zugeordnet, wobei der meteorologische Parameter mit den Schlechtwettervorhersagen verbunden ist, wobei der meteorologische Parameter (PAR) mittels eines Wettervorhersage-Onlinediensts bestimmt wird; und
e) eine Häufung von schlechten Witterungsbedingungen (CUM) auf der Strecke wird durch die Summe des meteorologischen Parameters an den Punkten der Strecke bestimmt, indem die Durchfahrzeit an den Punkten durch den Benutzer mittels des Geschwindigkeitsmodells des Fortbewegungsmittels bestimmt wird, das an die Strecke angewendet wird, **dadurch gekennzeichnet, dass** das Geschwindigkeitsmodell des Fortbewegungsmittels die Geschwindigkeit des Fortbewegungsmittels abhängig vom Typ des Fortbewegungsmittels schätzt, und dass das Geschwindigkeitsmodell von mindestens einem Parameter abhängt, der ausgewählt wird aus dem Straßentyp, der Neigung der Straße, der vom Fortbewegungsmittel entwickelten Leistung, wobei der Abstand zwischen den Punkten gemäß der räumlichen Präzision des im Schritt d) verwendeten Wettervorhersage-Onlinediensts bestimmt wird.

**2.** Verfahren nach Anspruch 1, wobei die Strecke (TRA) durch einen Algorithmus des kürzesten Wegs bestimmt wird.

**3.** Verfahren nach Anspruch 2, wobei der Algorithmus des kürzesten Wegs durch das Fortbewegungsmittel bedingt wird.

**4.** Verfahren nach Anspruch 1, wobei die Strecke (TRA) mittels eines Verlaufs von Strecken des Benutzers bestimmt wird.

**5.** Verfahren nach einem der vorhergehenden Ansprüche, wobei der Abstand vom Fortbewegungsmittel abhängt.

**6.** Verfahren nach einem der vorhergehenden Ansprüche, wobei der Schritt der Bestimmung der Häufung von schlechten Witterungsbedingungen (CUM) auf der Strecke für mehrere Startzeitpunkte durchgeführt wird.

**7.** Verfahren nach Anspruch 6, wobei das Verfahren einen zusätzlichen Schritt der Bestimmung des Startzeitpunkts enthält, der die Häufung von schlechten Witterungsbedingungen auf der Strecke minimiert.

**8.** Verfahren nach einem der vorhergehenden Ansprüche, wobei die Startposition durch Messen der aktuellen Position des Benutzers bestimmt wird.

**9.** Verfahren nach einem der vorhergehenden Ansprüche, wobei das Verfahren außerdem einen Schritt der Anzeige der Häufung von schlechten Witterungsbedingungen auf der Strecke auf einer Anzeigevorrichtung wie einem Smartphone, einem Tablet-Computer, einem Armaturenbrett, einer Webseite enthält.

**10.** Verfahren nach einem der vorhergehenden Ansprüche, wobei das Fortbewegungsmittel ausgewählt wird aus: zu Fuß gehen, Laufen, sanfte Mobilität, Zweiräder, vorzugsweise ist das Fortbewegungsmittel ein Fahrrad mit oder ohne elektrischer Unterstützung.

**11.** Computerprogrammprodukt, das von einem Kommunikationsnetz herunterladbar und/oder auf einem computerlesbaren Träger gespeichert und/oder von einem Prozessor oder einem Server ausführbar ist, das Programmcodeanweisungen zur Durchführung des Verfahrens nach einem der vorhergehenden Ansprüche enthält, wenn das Programm auf einem Computer oder auf einem Mobiltelefon ausgeführt wird.

## Claims

1. Method for determining an aggregate of bad weather on a route to be travelled by a user with a locomotion means, wherein a speed model (MOD) of said locomotion means is constructed, wherein the following steps are carried out by computing means:

   a) the position of departure and the position of arrival of said locomotion means are determined;

   b) at least one route to be travelled (TRA) between said position of departure and said position of arrival is determined;

   c) a plurality of points (POI) on said route are identified, said points of said route being regularly spaced apart;

   d) with each point of said route a time-variable meteorological parameter (PAR) is associated, said meteorological parameter being linked to the atmospheric influence forecasts, said meteorological parameter (PAR) being determined by means of an online weather forecast service; and

   e) an aggregate of bad weather (CUM) on said route is determined by the sum of said meteorological parameter at said points of said route, by determining the time of passage at said points by said user by means of said speed model of said locomotion means applied to said route,

   **characterized in that** said speed model of said locomotion means estimates the speed of said locomotion means as a function of the type of locomotion means, and **in that** said speed model is a function of at least one parameter chosen from among the type of road, the inclination of the road, the power developed by said locomotion means, the spacing between the points being determined according to the spatial precision of said online weather forecast service used in the step d).

2. Method according to Claim 1, wherein said route (TRA) is determined by a shortest path algorithm.

3. Method according to Claim 2, wherein said shortest path algorithm is constrained by said locomotion means.

4. Method according to Claim 1, wherein said route (TRA) is determined by means of a history of routes of said user.

5. Method according to one of the preceding claims, wherein the spacing depends on said locomotion means.

6. Method according to one of the preceding claims, wherein the step of determination of the aggregate of bad weather (CUM) on said route is performed for several times of departure.

7. Method according to Claim 6, wherein the method comprises an additional step of determination of the time of departure which minimizes the aggregate of bad weather on said route.

8. Method according to one of the preceding claims, wherein the position of departure is determined by measuring the current position of said user.

9. Method according to one of the preceding claims, wherein said method further comprises a step of display of said aggregate of bad weather on said route on a display device, such as a smart phone, a digital tablet, a dashboard, or an online site.

10. Method according to one of the preceding claims, wherein said locomotion means is chosen from among: walking, running, gentle mobility, and two-wheelers, preferably said locomotion means is a bicycle with or without electric assistance.

11. Computer program product that can be downloaded from a communication network and/or stored on a computer-readable medium and/or that can be executed by a processor or a server, comprising program code instructions for the implementation of the method according to one of the preceding claims, when said program is run on a computer or on a mobile phone.

[Fig 1]

```
          ┌──────────┐
          │   TRA    │
          └──────────┘
                │
                ▼
          ┌──────────┐
          │   POI    │
          └──────────┘
                │
                ▼
          ┌──────────┐
          │   PAR    │
          └──────────┘
                │
                ▼
┌──────────┐  ┌──────────┐
│   MOD    │─▶│   CUM    │
└──────────┘  └──────────┘
```

[Fig 2]

[Fig 3]

[Fig 4]

## RÉFÉRENCES CITÉES DANS LA DESCRIPTION

**Documents brevets cités dans la description**

- JP 5685010 B